# DEMANDE DE BREVET EUROPEEN

(11) **EP 0 771 524 A1**
(43) Date de publication de la demande: **07.05.1997**
(21) Numéro de dépôt: 96440094.9
(22) Date de dépôt: 31.10.1996
(51) Int. Cl.: A01K 89/01, A01K 89/027

(54) **Moulinet de pêche**

(30) Priorité: 06.11.1995 FR 9513246
(71) Demandeur: V M C Peche SA, 90120 Morvillars (FR)
(72) Inventeur: Heyer, Norbert, 90120 Mezire (FR)
(74) Mandataire: Nuss, Pierre

(57) **Abrégé**

La présente invention a pour objet un moulinet de pêche capoté muni d'une bobine (1) d'enroulement du fil et d'un dispositif de rembobinage (2).

Moulinet caractérisé en ce que le déplacement en va-et-vient de la bobine (1) d'enroulement du fil est réalisé par l'intermédiaire d'un dispositif à came (3), dont le chemin présente un pas inversé entre le parcours aller et celui de retour et qui est entraîné indirectement au moyen de la manivelle (4) d'actionnement du dispositif de rembobinage (2).

L'invention est plus particulièrement applicable dans le domaine de la fabrication des accessoires de pêche.

## Description

La présente invention concerne le domaine des accessoires de pêche, en particulier des moulinets, et a pour objet un moulinet de pêche.

Les moulinets pour cannes à pêche peuvent être classés suivant quatre types, à savoir les moulinets à bobine fixe et à pick-up ou anse de panier tournant et frein arrière, les moulinets à bobine fixe et frein avant, les moulinets à tambour tournant et les moulinets à bobine fixe capotée sans pick-up ou anse de panier tournant.

Actuellement, les moulinets pour cannes à pêche les plus répandus sont du type à bobine fixe avec pick-up ou anse de panier tournant et frein arrière. Ces moulinets connus présentent une anse de panier ou pick-up tournant autour de la bobine et guidant le fil sur un galet pour l'enrouler sur ladite bobine. La répartition du fil est réalisée grâce à un mouvement de va-et-vient de la bobine suivant son axe longitudinal obtenu par déplacement de l'axe support de bobine au moyen d'un dispositif à excentrique ou d'une vis de trancanage excentrée.

Dans un tel cas, la bobine d'enroulement du fil est déplacée suivant un mouvement sinusoïdal ayant pour effet, du fait de la rotation du ramasse-fil, un enroulement irrégulier du fil sur la bobine, c'est-à-dire plus important sur les parties de bobine correspondant au début de la levée de la bobine et à la fin de la descente de cette dernière, pendant lesquels le déplacement axial de la bobine est relativement faible par rapport à la longueur d'enroulement du fil, alors qu'entre ces deux périodes ledit déplacement est plus important. Il en résulte qu'une partie au moins de la bobine présente une moindre épaisseur et une moindre densité d'enroulement du fil, ce qui peut être préjudiciable à un bon fonctionnement du moulinet, notamment lors du dévidage de fil consécutif à un lancé.

Les moulinets à bobine fixe et frein avant présentent un principe d'enroulement du fil et de déplacement alternatif de la bobine qui est identique à celui décrit plus haut, mais l'axe de bobine est fixe et n'est, de ce fait, pas solidaire de la bobine.

Les moulinets à tambour tournant sont essentiellement utilisés pour la pêche en mer, en particulier à la traîne et se présentent sous forme d'un tambour horizontal à deux flasques pouvant contenir une très grande longueur de fil. Ces moulinets sont souvent munis d'un moyen de démultiplication, afin d'augmenter la puissance d'enroulement, la répartition du fil étant réalisée par l'intermédiaire d'un anneau guide-fil se déplaçant parallèlement au tambour.

Enfin, les moulinets à bobine fixe capotée sans pick-up ou anse de panier tournant mettent en oeuvre une cloche munie d'un ou de deux tétons accrochant le fil et tournant autour de la bobine fixe, afin d'y enrouler ledit fil.

Par ailleurs, on connaît, par US-A-5 012 990 un moulinet très compact permettant l'obtention d'une très grande course de va-et-vient de la bobine, ceci en mettant en oeuvre un dispositif à came ovale. Cette came est destinée à l'obtention d'une vitesse angulaire constante et, de ce fait, à transmettre un mouvement alternatif linéaire de vitesse constante.

Enfin, FR-A-2 722 060 décrit un moulinet, dont le déplacement en va-et-vient de la bobine est réalisé par une vis de trancanage, ce mouvement de va-et-vient étant également alternatif et parfaitement linéaire.

Sur tous ces moulinets existants, la répartition du fil est obtenue par un mouvement de va-et-vient de la bobine commandée par un excentrique et les mêmes problèmes de répartition du fil, que ceux décrits plus haut se posent.

La présente invention a pour but de pallier ces inconvénients en proposant un dispositif de déplacement de la bobine d'un moulinet de pêche capoté permettant un embobinage régulier du fil sur toute la surface de la bobine et empêchant un glissement des spires hors de leur position normale d'embobinage et, ainsi, leur coincement pouvant être une gêne pour un bon déroulement ultérieur du fil ayant pour conséquence des lancers imprécis.

A cet effet, l'invention a pour objet un moulinet de pêche capoté caractérisé en ce que le déplacement en va-et-vient de la bobine d'enroulement du fil est réalisé par l'intermédiaire d'un dispositif à came, dont le chemin présente un pas inversé entre le parcours aller et celui de retour et qui est entraîné indirectement au moyen de la manivelle d'actionnement du dispositif de rembobinage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et en coupe d'un moulinet conforme à l'invention ;
la figure 2 est une vue partielle en coupe représentant le dispositif de déplacement en va-et-vient de la bobine ;
la figure 3 est une vue en coupe suivant la figure 2 ;
la figure 4 est une vue analogue à celle de la figure 2 représentant un dispositif de freinage de la bobine, et
les figures 5 à 8 sont des vues partielles en coupe représentant un dispositif de rembobinage dans ses différentes positions de fonctionnement.

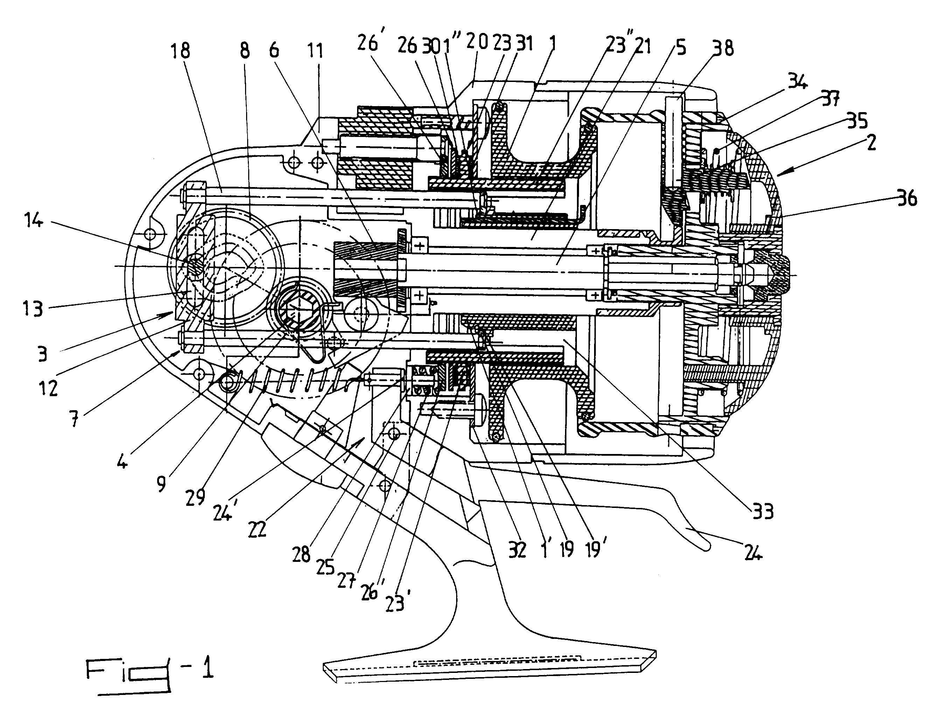

Conformément à l'invention et comme le montre plus particulièrement la figure 1 des dessins annexés, le moulinet de pêche capoté, qui est muni d'une bobine 1 d'enroulement du fil et d'un dispositif de rembobinage 2, est caractérisé en ce que le déplacement en va-et-vient de la bobine 1 d'enroulement du fil est réalisé par l'intermédiaire d'un dispositif 3 à came, dont le chemin présente un pas inversé entre le parcours aller et celui de retour et qui est entraîné indirectement au moyen de la manivelle 4 d'actionnement du dispositif de rembobinage 2.

La bobine 1 est guidée coaxialement sur un moyeu 21 du corps 11 du moulinet, ce moyeu 21 formant un guide pour un arbre 5 solidaire d'un pignon 6 de commande dudit arbre 5, et coopère avec un dispositif de déplacement en va-et-vient 7 s'appuyant sous la bobine 1 et actionné par le dispositif à came 3.

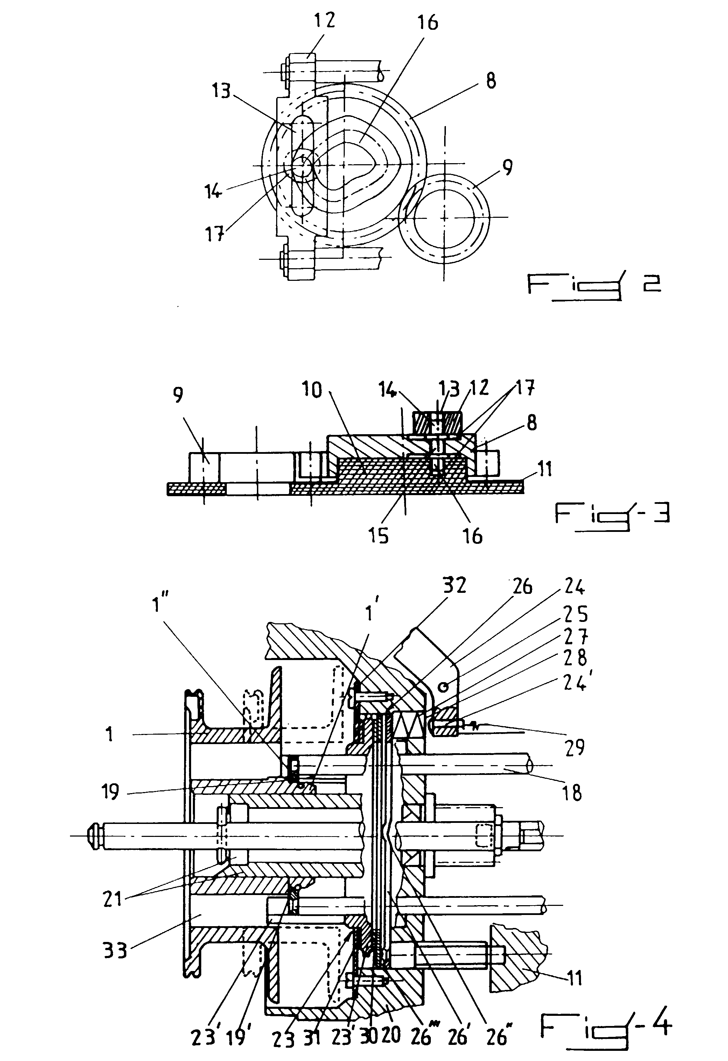

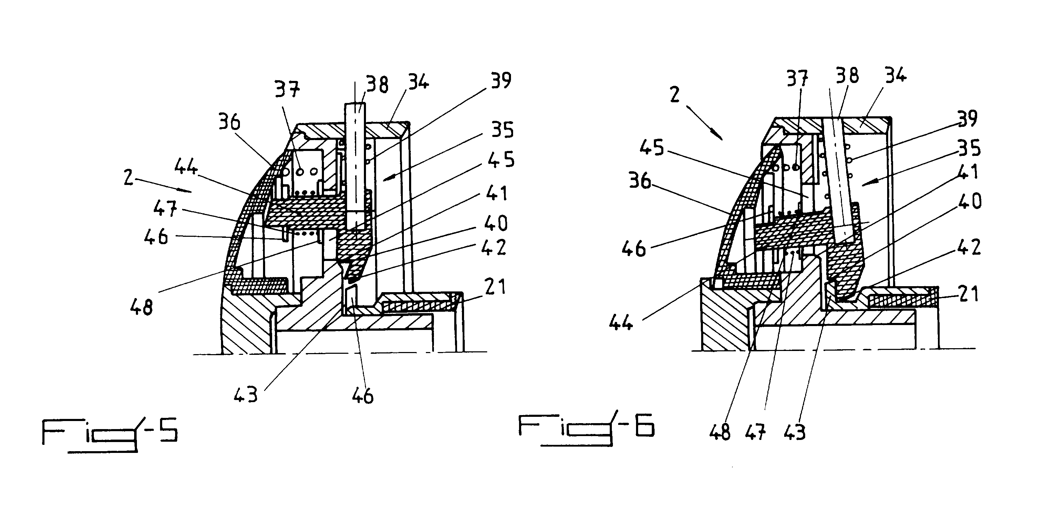

Ce dispositif à came 3 se présente avantageusement, comme le montrent les figures 1 à 3, sous forme d'un pignon 8 coopérant avec un autre pignon 9 d'entraînement, solidaire de la manivelle 4 d'actionnement du dispositif de rembobinage 2, ce pignon 8 étant guidé en rotation sur un bossage 10 du corps 11 du moulinet, et par une traverse 12, solidaire du dispositif de déplacement en va-et-vient 7, s'étendant au-dessus du pignon 8 et pourvue dans son sens longitudinal d'une rainure 13 de guidage d'une broche d'entraînement 14, traversant une rainure radiale correspondante 15 du pignon 8 et coopérant avec une rainure en forme de came 16 prévue dans le bossage 10 du corps 11 du moulinet. Afin d'assurer un maintien parfait de la broche d'entraînement 14 sur le pignon 8, celle-ci est épaulée de part et d'autre de la rainure de guidage radiale 15. Une telle broche 14 présentant deux épaulements 17 peut être obtenue, de manière connue, par une réalisation sous forme de deux pièces complémentaires serties lors de leur montage définitif sur le pignon 8.

Ainsi, par rotation de la manivelle 4, le pignon 8 est entraîné en rotation par le pignon 9 et déplace simultanément la broche d'entraînement 14. Du fait du guidage de cette dernière dans la came 16 du bossage 10 du corps de moulinet 11, elle se déplace radialement dans la rainure 15 du pignon 8 et entraîne simultanément la traverse 12 solidaire du dispositif de déplacement 7 dans un mouvement rectiligne suivant l'axe de l'arbre 5.

Le dispositif de déplacement en va-et-vient 7 est constitué par la traverse 12 formant un support de tiges 18 reliées à un appui 19 coopérant avec la face inférieure de la bobine 1, ces tiges 18 étant guidées en translation dans le corps 11 du moulinet pourvu, dans sa partie avant 20, du moyeu 21 entourant l'arbre 5 et formant un support coulissant pour la bobine 1.

Ainsi, lors d'un actionnement du dispositif à came 3, la traverse 12 est déplacée et entraîne, dans un mouvement parallèle, coaxialement à l'arbre 5, par l'intermédiaire des tiges 18, l'appui 19 coopérant avec la face inférieure de la bobine 1, de sorte que cette dernière est entraînée dans le même mouvement (figure 1).

La coopération entre la face inférieure de la bobine 1 et l'appui 19 est assurée par un manchon 1' en saillie sur ladite face inférieure et pénétrant dans un perçage correspondant 19' de l'appui 19, une bague élastique 1", logée dans une gorge correspondante dudit manchon 1' assurant le maintien de la bobine 1 en position montée. Ainsi, la bobine 1 peut facilement être montée par encliquetage sur le dispositif de déplacement en va-et-vient 7. n en est de même en ce qui concerne le démontage.

Les tiges 18 de liaison de l'appui 19 à la traverse 12 formant support sont disposées, de préférence, de part et d'autre de ladite traverse par rapport à l'axe de l'arbre 5. Ainsi, la force nécessaire au mouvement de va-et-vient de la bobine 1 peut être transmise de manière parfaitement équilibrée.

Selon une caractéristique de l'invention, la rainure en forme de came 16, prévue dans le bossage 10 du corps 11 du moulinet, présente un chemin à pas inversé entre le parcours aller et celui de retour comportant quatre quartiers symétriques par paires par rapport au centre. Une telle configuration permet d'optimaliser le mouvement de la bobine 1 par obtention de deux mouvements, de montée et de descente, décalés entre-eux, correspondant respectivement au parcours aller et au parcours retour du chemin de la came, de sorte que le bobinage réalisé est parfait, chaque spire de fil enroulée pendant la descente venant se placer entre deux spires enroulées pendant la levée.

Conformément à une autre caractéristique de l'invention, le moulinet est équipé d'un frein complémentaire 22 agissant directement sur une pièce 23 solidaire en rotation de la bobine 1 et constitué par un levier d'actionnement 24 monté à pivotement sur un axe 25 du corps 11 du moulinet et coopérant avec un ensemble de freinage à rondelles 26 par l'intermédiaire d'un actionneur à ressort 27 pourvu d'une plaque d'appui 28 coopérant avec un appendice 24' prévu sur l'extrémité du levier 24, ledit levier 24 étant rappelé en position de desserrage par l'intermédiaire d'un ressort de rappel 29 et l'ensemble de freinage à rondelles 26 coopérant, du côté opposé à l'actionneur 27, avec une rondelle de frottement 30 s'appuyant sur la pièce 23 solidaire en rotation de la bobine 1, une deuxième rondelle de frottement 31 étant interposée entre ladite pièce 23 et une plaque fixe de maintien 32 solidaire de la partie avant 20 du corps 11 du moulinet.

L'ensemble de freinage à rondelles 26 est constitué par une rondelle 26' comportant deux bossages 26" de répartition diamétralement opposés, ces bossages coopérant avec une deuxième rondelle 26"' plate. Ainsi, la pression exercée par le levier d'actionnement 24 est transmise par l'actionneur 25 et répartie de manière centrée sur la rondelle plate 26"' qui transmet l'effort de compression sur la rondelle de frottement 30 et, de ce fait, sur la pièce 23, cette dernière subissant une contre pression par l'intermédiaire de la deuxième rondelle de frottement 31 interposée entre la pièce 23 et la plaque fixe de maintien 32.

La pièce 23 solidaire en rotation de la bobine 1 se présente sous forme d'une rondelle 23' s'étendant autour des tiges 18 de liaison de l'appui 19, coopérant avec la face inférieure de la bobine 1, à la traverse de support 12 actionnée par le dispositif à came 3 et par au moins un élément 23" en saillie perpendiculairement sur la rondelle 23' et coopérant avec un logement correspondant 33 de la bobine 1. Ainsi, après un ferrage, le fil enroulé sur la bobine a tendance, du fait de la tension qu'il subit, à entraîner la bobine en rotation et à entraîner ainsi solidairement la pièce 23. Un freinage partiel ou total de la pièce 23 peut alors être réalisé par une traction sur le levier d'actionnement 24, de manière à déplacer l'actionneur 25 et, de ce fait, l'appui 19 dans le sens d'une compression de la rondelle 23' comportant les bossages 23" sur la deuxième rondelle plate 23"'. Cette deuxième rondelle plate 23"' a alors tendance à écraser la rondelle de frottement 30 sur la face correspondante de la rondelle 23' et, par déplacement de cette dernière en direction de la plaque de maintien 32 de la partie avant 20 du corps 11 du moulinet, à écraser la deuxième rondelle de frottement 31 entre l'autre face de la rondelle 23' et ladite plaque fixe de maintien 32.

Grâce au frein complémentaire 22, il est possible de freiner directement la bobine au moyen de la pièce 23, l'ensemble de freinage à rondelles 26, dont les rondelles présentent un grand diamètre par rapport aux différentes pièces tournantes, se comportant comme un véritable frein à disques permettant un freinage extrêmement précis.

Selon une autre caractéristique de l'invention, et comme le montrent plus particulièrement les figures 1 et 5 à 8 des dessins annexés, le moulinet est pourvu d'un dispositif de rembobinage 33, essentiellement constitué par un volant 34 logeant deux doigts radiaux 35 d'entraînement du fil et par un couvercle 36 d'actionnement d'escamotage des doigts radiaux 35, monté avec possibilité de coulissement contre l'action d'un ressort 37, de manière centrée, sur le volant 34, ce dispositif de rembobinage 33 étant fixé sur l'extrémité de l'arbre 5 et solidaire en rotation de ce dernier.

Les doigts radiaux 35 d'entraînement du fil sont guidés radialement dans le volant 34, traversent la paroi de ce dernier par l'intermédiaire d'ergots en céramique 38 et sont rappelés en position d'escamotage par des ressorts de compression 39 s'appuyant sur la face interne de la paroi du volant 34, le côté opposé des doigts radiaux 35 étant muni, d'une part, d'un épaulement 40 destiné à coopérer avec un épaulement circulaire 41 d'un palier interne du volant 34, en position d'escamotage des doigts 35, et, d'autre part, d'une extrémité biaisée 42 s'étendant au-dessus d'une came en disque 43 solidaire de l'extrémité du moyeu 21 entourant l'arbre 5 en position de service, et s'éclipsant derrière ladite came 43 pour l'escamotage des doigts radiaux 35.

Les doigts radiaux 35 sont munis, en outre, chacun d'une broche d'actionnement 44, s'étendant perpendiculairement au doigt et guidée radialement dans une rainure correspondante 45 du volant 34, l'extrémité libre de la broche 44 étant munie, près de son bord, d'une rondelle 46, ou analogue, d'appui d'un ressort de rappel 47 coopérant à son autre extrémité avec une rondelle coulissante ou analogue 48 d'appui sur les bords de la rainure de guidage 45.

La came en disque 43, solidaire de l'extrémité du moyeu 21 entourant l'arbre 5, présente, d'une part, deux découpes symétriques 46 s'étendant en pente en sens opposé à la rotation de la came 43 et, d'autre part, un bord externe présentant une inclinaison correspondante, mais de sens opposé, à celle des bords biaisés 42 des doigts radiaux 35. Ainsi, après escamotage des doigts radiaux 35 et positionnement de leur extrémité 42 dans les découpes 46, une rotation de l'arbre 5 et donc du volant 34 a pour conséquence un glissement des extrémités biaisées 42 sur la pente des découpes 46, amenant les doigts radiaux 35 dans leur position de service, dans laquelle ils sont maintenus par appui de leur épaulement 40 sur l'épaulement circulaire 41 du volant 34, sous l'effet des ressorts de rappel 47. Dans cette position de service, du fait de la conformation biaisée des extrémités 42 et du bord externe de la came 43, lesdites extrémités 42 ne sont pas en contact avec la came 43 pendant le fonctionnement en ramassage de fil.

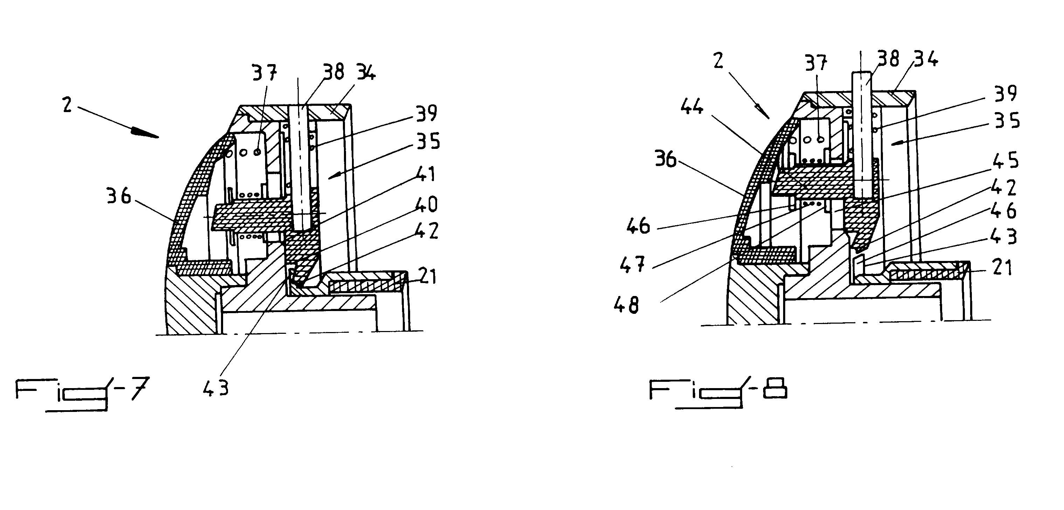

En partant de la position de ramassage de fil représentée à la figure 5 des dessins annexés, il suffit, pour réaliser un lancé et dégager à cet effet le passage du fil par escamotage des doigts 35 dans le volant 34, d'appuyer sur le couvercle 36, ce qui a pour effet de repousser les broches d'actionnement 44 des doigts 35 contre l'action de leurs ressorts de rappel 47 et ainsi de dégager l'épaulement 40 des doigts 35 de leur appui sur l'épaulement circulaire 41 du palier interne du volant 34 (figures 5 et 6).

Sous l'effet des ressorts de compression 39, les doigts radiaux 35 sont alors rétractés dans le volant 34 et leur extrémité comportant la partie biaisée 42 est amenée derrière la came en disque 43 et y est maintenue, après relâchement de la pression sur le couvercle 36 sous l'effet du ressort de rappel 47 (figure 6).

Une légère rotation de l'arbre 5 et du volant 34 aura d'abord pour effet de faire entrer les extrémités 41 des doigts 35 dans les découpes 46 de la came 43 et une rotation complémentaire déplacera les doigts 35 dans leur position de service, par glissement sur la pente des découpes 46 et atteinte de la position extrême de sortie correspondant à l'enclenchement de l'épaulement 40 des doigts 35 avec l'épaulement 41 du volant 34 (figures 7 et 8).

Grâce à l'invention il est possible de réaliser un moulinet capoté, dont le déplacement de la bobine est commandé par l'intermédiaire d'un dispositif à came permettant un bobinage parfait du fil avec enroulement d'un maximum de spires pour un déplacement de bobine faible. Ceci est notamment dû au fait que le mouvement alternatif de la bobine s'effectue à vitesse et amplitude variables pour une vitesse de rotation constante de la manivelle 4 du dispositif de rembobinage 2.

En outre, le frein complémentaire 22 entraîne un freinage efficace de la bobine et le dispositif de rembobinage 33 permet un ramassage efficace dudit fil au moyen de doigts entièrement escamotables dans le volant pour le lancé.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Moulinet de pêche capoté, muni d'une bobine (1) d'enroulement du fil et d'un dispositif de rembobinage (2), caractérisé en ce que le déplacement en va-et-vient de la bobine (1) d'enroulement du fil est réalisé par l'intermédiaire d'un dispositif à came (3), dont le chemin présente un pas inversé entre le parcours aller et celui de retour et qui est entraîné indirectement au moyen de la manivelle (4) d'actionnement du dispositif de rembobinage (2).

2. Moulinet, suivant la revendication 1, caractérisé en ce que la bobine (1) est guidée coaxialement sur un moyeu (21) du corps (11) du moulinet, ce moyeu (21) formant un guide pour un arbre (5) solidaire d'un pignon (6) de commande dudit arbre (5), et coopère avec un dispositif de déplacement en va-et-vient (7) s'appuyant sous la bobine 1 et actionné par le dispositif à came (3).

3. Moulinet, suivant l'une quelconque des revendications 1 et 2, caractérisé en ce que le dispositif à came (3) se présente sous forme d'un pignon (8) coopérant avec un autre pignon (9) d'entraînement, solidaire de la manivelle (4) d'actionnement du dispositif de rembobinage (2), ce pignon (8) étant guidé en rotation sur un bossage (10) du corps (11) du moulinet, et par une traverse (12), solidaire du dispositif de déplacement en va-et-vient (7), s'étendant au-dessus du pignon (8) et pourvue dans son sens longitudinal d'une rainure (13) de guidage d'une broche d'entraînement (14), traversant une rainure radiale correspondante (15) du pignon (8) et coopérant avec une rainure en forme de came (16) prévue dans le bossage (10) du corps (11) du moulinet.

4. Moulinet, suivant l'une quelconque des revendications 1 à 3, caractérisé en ce que le dispositif de déplacement en va-et-vient (7) est constitué par la traverse (12) formant un support de tiges (18) reliées à un appui (19) coopérant avec la face inférieure de la bobine (1), ces tiges (18) étant guidées en translation dans le corps (11) du moulinet pourvu, dans sa partie avant (20), du moyeu (21) entourant l'arbre (5) et formant un support coulissant pour la bobine (1).

5. Moulinet, suivant la revendication 4, caractérisé en ce que la coopération entre la face inférieure de la bobine (1) et l'appui (19) est assurée par un manchon (1') en saillie sur ladite face inférieure et pénétrant dans un perçage correspondant (19') de l'appui (19), une bague élastique (1"), logée dans une gorge correspondante dudit manchon (1') assurant le maintien de la bobine (1) en position montée.

6. Moulinet, suivant la revendication 3, caractérisé en ce que la rainure en forme de came (16), prévue dans le bossage (10) du corps (11) du moulinet, présente un chemin à pas inversé entre le parcours aller et celui de retour comportant quatre quartiers symétriques par paires par rapport au centre.

7. Moulinet, suivant la revendication 1, caractérisé en ce qu'il est équipé d'un frein complémentaire (22) agissant directement sur une pièce (23) solidaire en rotation de la bobine (1) et constitué par un levier d'actionnement (24) monté à pivotement sur un axe (25) du corps (11) du moulinet et coopérant avec un ensemble de freinage à rondelles (26) par l'intermédiaire d'un actionneur à ressort (27) pourvu d'une plaque d'appui (28) coopérant avec un appendice (24') prévu sur l'extrémité du levier (24), ledit levier (24) étant rappelé en position de desserrage par l'intermédiaire d'un ressort de rappel (29) et l'ensemble de freinage à rondelles (26) coopérant, du côté opposé à l'actionneur (27), avec une rondelle de frottement (30) s'appuyant sur la pièce (23) solidaire en rotation de la bobine (1), une deuxième rondelle de frottement (31) étant interposée entre ladite pièce (23) et une plaque fixe de maintien (32) solidaire de la partie avant (20) du corps (11) du moulinet.

8. Moulinet, suivant la revendication 7, caractérisé en ce que l'ensemble de freinage à rondelles (26) est constitué par une rondelle (26') comportant deux bossages (26") de répartition diamétralement opposés, ces bossages coopérant avec une deuxième rondelle (26"') plate.

9. Moulinet, suivant la revendication 7, caractérisé en ce que la pièce (23) solidaire en rotation de la bobine (1) se présente sous forme d'une rondelle (23') s'étendant autour des tiges (18) de liaison de l'appui (19), coopérant avec la face inférieure de la bobine (1), à la traverse de support (12) actionnée par le dispositif (3) à excentrique elliptique et par au moins un élément (23") en saillie perpendiculairement sur la rondelle (23') et coopérant avec un logement correspondant (33) de la bobine (1).

10. Moulinet, suivant la revendication 1, caractérisé en ce qu'il est pourvu d'un dispositif de rembobinage (33), essentiellement constitué par un volant (34) logeant deux doigts radiaux (35) d'entraînement du fil et par un couvercle (36) d'actionnement d'escamotage des doigts radiaux (35), monté avec possibilité de coulissement contre l'action d'un ressort (37), de manière centrée, sur le volant (34), ce dispositif de rembobinage (33) étant fixé sur l'extrémité de l'arbre (5) et solidaire en rotation de ce dernier.

11. Moulinet, suivant la revendication 10, caractérisé en ce que les doigts radiaux (35) d'entraînement du fil sont guidés radialement dans le volant (34), traversent la paroi de ce dernier par l'intermédiaire d'ergots en céramique (38) et sont rappelés en position d'escamotage par des ressorts de compression (39) s'appuyant sur la face interne de la paroi du volant (34), le côté opposé des doigts radiaux (35) étant muni, d'une part, d'un épaulement (40) destiné à coopérer avec un épaulement circulaire (41) d'un palier interne du volant(34), en position d'escamotage des doigts (35), et, d'autre part, d'une extrémité biaisée (42) s'étendant au-dessus d'une came en disque (43) solidaire de l'extrémité du moyeu (21) entourant l'arbre (5) en position de service, et s'éclipsant derrière ladite came (43) pour l'escamotage des doigts radiaux (35).

12. Moulinet, suivant l'une quelconque des revendications 10 et 11, caractérisé en ce que les doigts radiaux (35) sont munis, en outre, chacun d'une broche d'actionnement (44), s'étendant perpendiculairement au doigt et guidée radialement dans une rainure correspondante (45) du volant (34), l'extrémité libre de la broche (44) étant munie, près de son bord, d'une rondelle (46), ou analogue, d'appui d'un ressort de rappel (47) coopérant à son autre extrémité avec une rondelle coulissante ou analogue (48) d'appui sur les bords de la rainure de guidage (45).

13. Moulinet, suivant la revendication 11, caractérisé en ce que la came en disque (43), solidaire de l'extrémité du moyeu (21) entourant l'arbre (5), présente, d'une part, deux découpes symétriques (46) s'étendant en pente en sens opposé à la rotation de la came (43) et, d'autre part, un bord externe présentant une inclinaison correspondante, mais de sens opposé, à celle des bords biaisés (42) des doigts radiaux (35), permettant à ces derniers de s'escamoter au-delà du diamètre de la came (43) et donc de ne pas être en contact avec cette dernière durant le fonctionnement normal du moulinet.
